(19)

Europäisches
Patentamt
European
Patent Office
Office européen
des brevets

(11) **EP 2 341 369 A1**

(12) **EUROPEAN PATENT APPLICATION**

(43) Date of publication:
**06.07.2011 Bulletin 2011/27**

(51) Int Cl.:
***G01S 17/48*** (2006.01)  ***G01S 17/93*** (2006.01)

(21) Application number: **10192071.8**

(22) Date of filing: **22.11.2010**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br><br>(30) Priority: **04.12.2009 US 630953**<br><br>(71) Applicant: **Delphi Technologies, Inc.<br>Troy, MI 48007 (US)** | (72) Inventors:<br>• **Griffin, Dennis P.<br>Noblesville, IN 46062 (US)**<br>• **Fultz, William W.<br>Carmel, IN 46033 (US)**<br><br>(74) Representative: **Denton, Michael John et al<br>Delphi France SAS<br>64 Avenue de la Plaine de France<br>ZAC Paris Nord II<br>B.P. 65059, Tremblay en France<br>95972 Roissy Charles de Gaulle Cedex (FR)** |

(54) **Image based vehicle object detection sensor with range finder**

(57)     An image based object detection system (20) and method using a range finder are provided. The system (20) includes an illuminator (22) located on a vehicle (10) to generate an illumination beam (26) in a coverage zone (28) relative to the vehicle (10). The system (20) also includes an optics device (32) spaced from the illuminator (22) for collecting reflected illumination from one or more objects (70A) in the coverage zone (28) and an imager (30) comprising an array of pixels for receiving images from the coverage zone (28) via the optics device (32). The imager (30) captures images from the coverage zone (28) and the collected reflected illumination from the objects (70A) in the coverage zone (28). The system (20) further includes a processor (42) for processing the received images and the reflected illumination signals. The processor (42) determines range to an object (70A) in the coverage zone (28) by triangulation based on locations of the pixels in the imager detecting the reflected illumination.

EP 2 341 369 A1

**Description**

Technical Field

The present invention generally relates to vehicle object detection systems, and more particularly relates to an object detection system for detecting distance to an object relative to the host vehicle, particularly for use as a vehicle backup aid.

Background of the Invention

Automotive vehicles are increasingly being equipped with various sensors for detecting objects relative to the vehicle. For example, some vehicle backup assistance devices employ a camera and display to provide video images to the driver of the vehicle of the coverage zone behind the vehicle when the vehicle transmission is in reverse. In addition, various other sensors have been employed to detect objects located within the coverage zone proximate to the vehicle. For example, radar sensors have been employed to detect an object and the distance to and velocity of the object relative to the vehicle. However, when used in combination, separate cameras and radar sensors add to the overall cost and complexity of the system.

It is desirable to provide for an object detection system for a vehicle that detects object distance and provides for an effective detection system at an affordable cost.

Summary of the Invention

According to one aspect of the present invention, an image based vehicle object detection system having a range finder is provided. The system includes an illuminator adapted to be located on a vehicle for generating a pattern of illumination in an object detection coverage zone relative to the vehicle. The system also includes an optics device adapted to be located on the vehicle and spaced from the illuminator for collecting reflected illumination from one or more objects in the coverage zone, and an imager comprising an array of pixels for receiving images from the coverage zone via the optics device. The imager captures images from the coverage zone and the collected reflected illumination from objects in the coverage zone. The system further includes a processor for processing the received images and reflected illumination signals, wherein the processor determines range to an object in the coverage zone based on a location of the pixels of the imager detecting the reflected illumination.

Also the illuminator generates a substantially planar beam of illumination that may be a horizontal. The illuminator may be an infrared illumination source for generating infrared radiation generating rear IR illumination substantially invisible to a person. The illuminator and imager are located on a vehicle so as to detect objects in the vehicle backup zone. The imager comprises a camera for generating video images, wherein the distance is overlaid onto displayed video images. The range is computed as a function of the distance between the illuminator and the imager. The processor further detects the angle ($\alpha$) of a detected object relative to a central axis of the coverage zone and, the detected one or more objects are dynamic object relative to the vehicle.

According to another aspect of the present invention, a method of detecting range to an object in a coverage zone with an imager on a vehicle is provided. The method includes the step of generating a pattern of light illumination with an illuminator within a coverage zone relative to the vehicle. The method also includes the steps of receiving reflected illumination from one or more objects in the coverage zone with an optics device, and directing the received reflected illumination via the optics device onto an imager that is spaced from the illuminator. The imager includes an array of pixels for receiving the reflected illumination from the coverage zone. The method further includes the step of processing the received reflected illumination with a processor to determine range to an object based on location of the pixels receiving the reflected illumination.

These and other features, advantages and objects of the present invention will be further understood and appreciated by those skilled in the art by reference to the following specification, claims and appended drawings.

The step of generating a pattern of light illumination comprises generating a substantially planar beam of illumination that may be horizontal. Also, the step of generating a pattern of light illumination comprises generating a pattern of infrared illumination. The method determines range to one or more objects in the backup zone of a vehicle.

The method further comprises the step of generating video images of the coverage zone with the imager and displaying the video images on a display with the determined range and the step of detecting an angle ($\alpha$) to an object relative to a central axis of the coverage zone, the object being dynamic relative to the vehicle.

Brief Description of the Drawings

The present invention will now be described, by way of example, with reference to the accompanying drawings, in which:

FIG. 1 is a rear perspective view of an automotive vehicle employing an object detection system, according to one embodiment;

FIG. 2 is a schematic diagram illustrating the object detection system for detecting range to objects, according to one embodiment;

FIG. 3 is a top schematic view illustrating the object detection sensor for detecting angle to objects;

FIG. 4 is a block diagram illustrating the object detection sensor, according to one embodiment;

FIG. 5A is a sensed image of three objects illuminated with the IR illumination, according to one example;

FIG. 5B is the sensed image of FIG. 5A without the IR illumination;

FIG. 5C is a processed image that subtracts the image data shown in FIG. 5B from the image data shown in FIG. 5A;

FIG. 6A is an image showing three objects illuminated with IR illumination, according to a second example;

FIG. 6B is the sensed image of FIG. 6A without the IR illumination;

FIG. 6C is a processed image subtracting the image data of FIG. 6B from the image data of FIG. 6A; and

FIG. 7 is a flow diagram illustrating a routine for detecting object range, according to one embodiment.

Description of the Preferred Embodiments

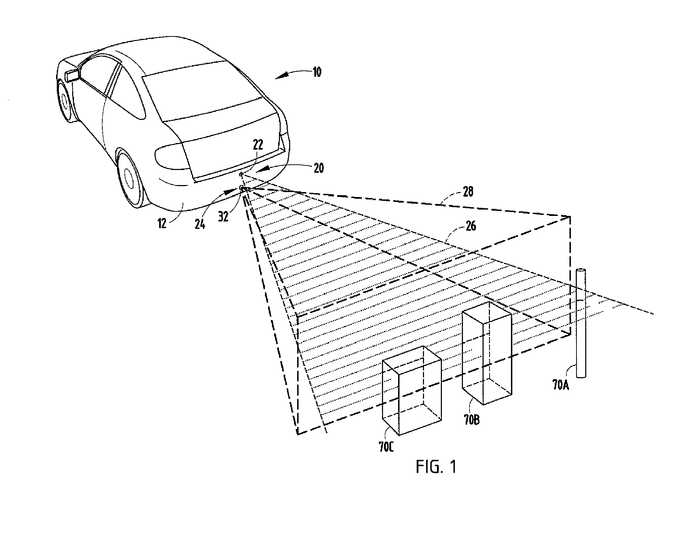

Referring now to FIG. 1, an automotive wheeled vehicle 10 is illustrated having an image based object detection system 20 shown integrated at the rear side 12 of vehicle 10 to serve as a vehicle backup assist aide, according to one embodiment. The vehicle 10 generally includes a front side, two lateral sides and the rear side 12, with the backup system shown located generally on the rear side 12 for sensing objects rearward of the vehicle 10, particularly when the vehicle 10 has its transmission gear in the reverse position to assist with backup maneuvers. The system 10 monitors a coverage zone 28 generally rearward of the vehicle to detect one or more objects in the coverage zone and may display video images of the coverage zone 28 on a display in the vehicle 10. In addition, the system 20 advantageously detects range to each object detected in the coverage field and may detect further parameters of detected objects as explained herein.

The object detection system 20 is shown employing an illuminator 22 located on the vehicle 10, generally on the rear side 12 according to the disclosed embodiment to generate a pattern of illumination 26 in the object detection coverage zone 28 relative to the vehicle 10. The illuminator 22 may be mounted near the rear bumper or at various other locations on the vehicle 10. The illuminator 22 may include a rear infrared (IR) laser light illuminator for generating a pattern of infrared illumination which is generally invisible to the naked human eye. The IR illumination may have a wavelength in the range of 750 nm to 1000 nm, according to one embodiment. More specifically, the IR laser wavelength illuminator 22 may generate a wavelength of about 900 nm. The IR illuminator 22 may generate visible light illumination, according to other embodiments, such as for example visible light wavelengths in the range of about 400 nm to 750 nm and may have a specific color, such as a visible red laser illumination of about 650 nm, however, the visible light illumination may be more susceptible to interference by ambient and other visible light. The illuminator 22 may be implemented as a laser line generator mounted on a printed circuit board, such as Model No. LDM-1, commercially available from Laserex Technologies.

The pattern of illumination 20 may include a substantial planar beam directed along a plane such that a line of illumination is formed in a two-dimensional image from the rear of the vehicle 10. The planar beam has a horizontal pattern, according to the disclosed embodiment, so as to transmit a planar horizontal beam of IR illumination in the coverage zone 28. It should be appreciated that the illuminator 22 may generate one or more patterns, such as one or more lines or planes of illumination in the coverage zone 28. It should be appreciated that other illumination beam patterns may be employed, according to other embodiments. The illuminator 22 may generate a fixed beam according to one embodiment, or may generate a scanning laser beam such as scanned horizontal lines, according to another embodiment.

The object detection system 20 is also shown having an imaging module 24 which includes an optics device 32 and an imager 30. The optics device 24 is shown located on the rear side 12 of the vehicle 10 and is spaced from the illuminator 22. The optics device 32 collects image data including reflected illumination from one or more objects in the coverage zone 28 and directs the collected image data onto the imager 30. According to one embodiment, the optics device 32 may include an optical lens for receiving and focusing images and the reflected IR illumination onto an array of pixels of the imager 30.

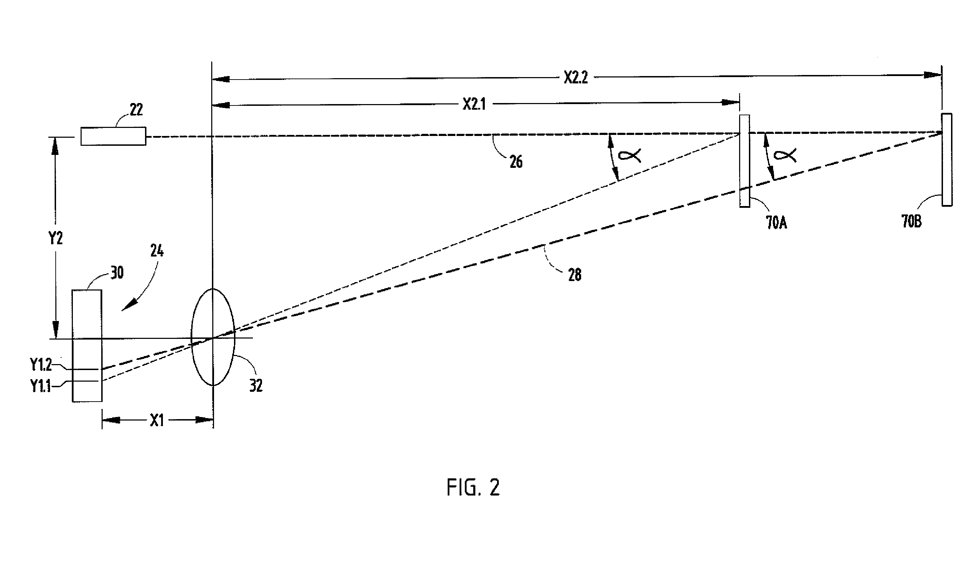

The imager module 24 also includes the imager 30, as seen in FIGS. 2-4, which comprises an array of pixels for receiving images from the coverage zone 28 directed via the optics device 32. The imager 30 is aligned with the optics device 32 to receive reflected IR illumination and images from the coverage zone 28 and is spaced from the illuminator 22 by a distance Y2. The imager 30 captures images from the coverage zone 28 and the collected reflected illumination from one or more objects in the coverage zones. The location of the pixels of the imager 30 receiving the reflected illumination is used to determine the distance to the objects based upon a triangulation algorithm. The imager 30 may include a CMOS camera having an array of pixels such as 480 rows and 640 columns of pixels. It should be appreciated that a commercially available off the shelf camera or other imager may be employed. In the embodiment shown, the imager 30 is spaced from the illuminator 22 by a vertical distance Y2, however, it should be appreciated that the imager 30 and illuminator 22 may be spaced horizontally or in other orientations. According to one example, the distance Y2 may be approximately twelve (12) inches. It should be appreciated that one or more imagers 30 may be employed and that the signal processing circuitry may support multiple imagers and illuminators. Multiple imagers may assist in covering a large field of view and overlapping fields of view.

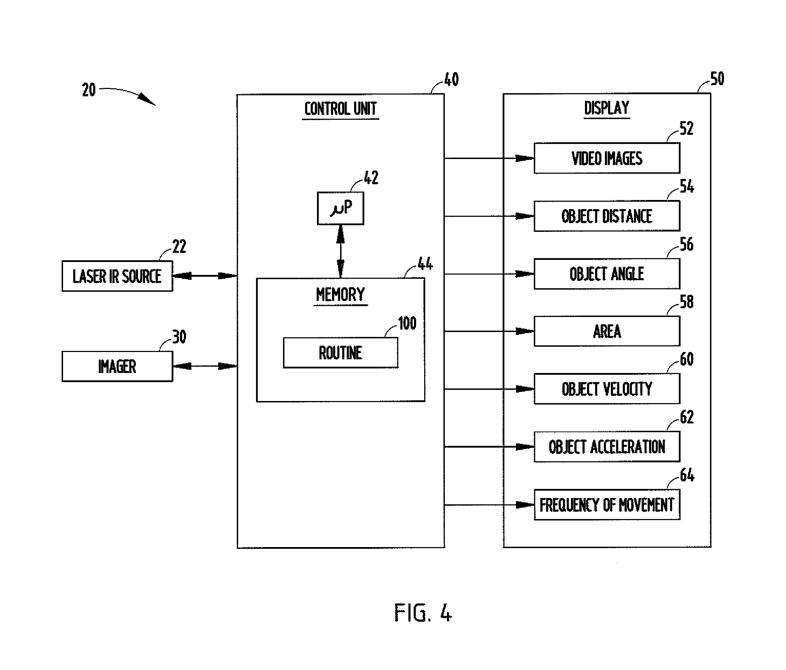

The object detection system 20 includes a control unit 40 as shown in FIG. 4. The control unit 40 includes a processor, such as a microprocessor 42 and memory 44. Memory 44 is shown including a routine 100 for processing the received images and reflected illumination signals. The microprocessor 42 or other analog and/or digital circuitry may be used to execute the routine 100. The processor 42 determines range to an object in the coverage field based on a location of the pixels of the imager 30 detecting the reflected illumination.

The control unit 40 is shown communicating with a display 50 which may include a navigation or backup display within the vehicle passenger compartment and viewable to a driver of the vehicle 10, according to one embodiment. The control unit 40 is shown providing video images 52 to the display 50 such that a driver of the vehicle 10 can view the coverage zone 28 and video images on the display 50. Additionally, control unit 40 generates a determined distance 54 for each detected object and other parameters which include object angle 56, object area 58, object velocity 60, object acceleration 62 and frequency of movement of an object 64. One or more of the aforementioned object parameters may be overlaid onto the display of the video images 52 such that a viewer or driver of the vehicle 10 may display the video images of the coverage zone 28 and the various determined object parameters at the same time, according to one embodiment. It should be appreciated that the field of view of the sensor is fixed relative to the vehicle 10, however, the vehicle 10 typically is moving in reverse during a vehicle backup which creates a dynamic object from the sensor's point of view. Thus, the system 20 tracks each object in the field of view of the sensor since the relative object distances and object angles may change dynamically with the movement of the vehicle 10. Additionally, in some driving scenarios an object such as a bicycle or a pet could suddenly cross the vehicle's path in the backup zone, and such dynamic objects may need to be identified immediately and tracked by the system 20 as they move across the field of view 28. Further, inclement weather conditions such as rain, snow, and other conditions should be filtered out by the system 20 so as not to avoid false alarms.

The distance to a detected object can be calculated as shown in FIG. 2, according to one embodiment. The IR illumination source 22 is shown spaced from both the imager 30 and the imager optics device 32. The IR illumination source 22 is shown spaced vertically (one below the other) from the imager 30 by a distance Y2. The imager 30 is spaced horizontally from the imager optics device 32 by a distance X1. Due to the known separation distance Y2 between the IR illumination source 22 and the imager 30 and the known separation distance X1 between the imager 30 and the imager optics device 32, the distance to one or more objects detected in the coverage zone 28 can be computed based on triangulation. As shown, a first object 70A is detected at a distance X2.1, and a second object 70B is detected at a further distance X2.2. Each detected object forms an angle $\alpha$ between the line extending from the IR illumination source 22 and the line extending through the imager optics device 32 to the imager 30. The range (distance) to each object 70A and 70B can be determined based upon the following equation:

$$\mathrm{arctangent}\ Y2/X2 = \mathrm{arctangent}\ Y1/X1 = \alpha$$

wherein X1 and Y2 are fixed and known, X2 is the horizontal distance of the object which is X2.1 or X2.2, and Y1 is the vertical distance of the illumination impinging on the imager of a detected object which is Y1.1 or Y1.2, in this example. In this example, the distance to object 70A is X2.1 = Y2 * X1/Y1.1, and the distance to object 70B is X2.2 = Y2 * X1/Y1.2. Y1.1 is the height or elevation location of the pixels receiving reflected illumination from the first object 70A and elevation location Y1.2 is the pixel location of the received IR illumination reflected from the second object 70B. The infrared lambertian reflections by the objects 70A and 70B are focused onto the camera/imager 30 by the optics device 32 and the pixel lines that are illuminated within the imager 30 are proportional to the distance of the object(s) from the sensor system. The illuminated pixels within the imager 30 are a function of the similar triangles created by the object distance from the sensor system and the optical spacing of the light illumination source 22 from the imager 30. The distance of the objects 70A and 70B to the infrared proximity sensor system can be calculated using the relative location of the reflected illuminated line image on the receiving imager(s) active area. The photocurrents generated by the reflected image are captured in the imager 30, transferred from the imager 30 and converted into a digital image. The digital image is processed by the signal processing algorithm that identifies the illuminated pixels and calculates the associated target range based on the relative vertical index of the pixels on the imager 30. The illumination beam (e.g., line) generated for the target determination is synchronized to the imager frame rate and is illuminated only for the capture of the target reflection on the imager 30. The modulation of the infrared light illumination with the frame rate of the imager minimizes ambient light and other sources of interference. In addition, one or more optical filters may be employed to filter out ambient and other unwanted light sources. If camera optics are heavily filtered to remove visible light sources and reflections in an application, a second camera may be employed to provide the visible images to be presented to the driver.

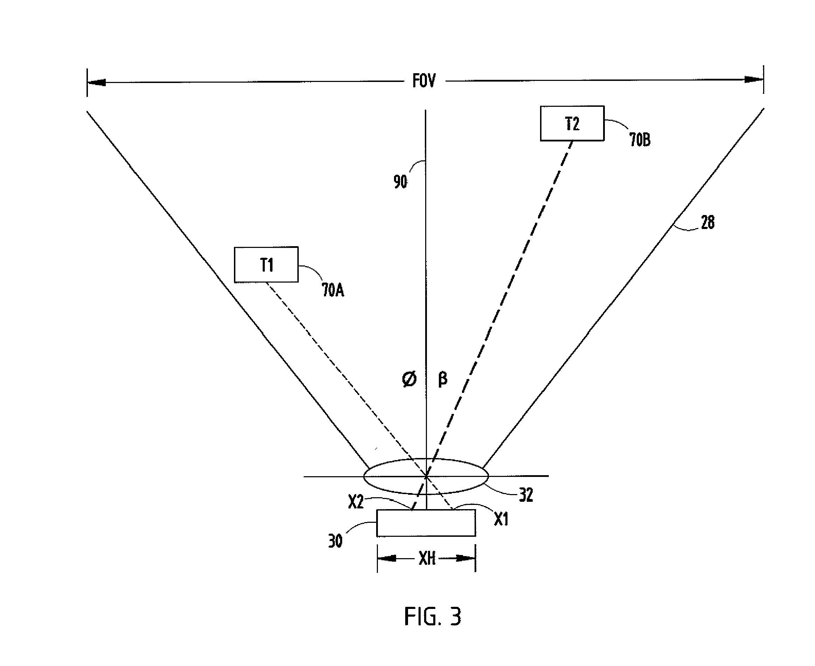

The object detection system 20 further may determine the angle of each object relative to a central axis 90 of the coverage zone 28 as shown in FIG. 3. First object 70A is located at an angle $\phi$ relative to the central axis 90, while second object 70B is located at an angle $\beta$ relative to the central axis 90. The imager 30 has a number of horizontal pixels (e.g., 640 pixels) in each line shown by line XH, and the angle $\phi$ or $\beta$ can be computed based upon the pixel location of the received reflected illumination from each of the targets 70A and 70B within the horizontal line XH. The angles $\phi$ and $\beta$ for each of the first and second targets 70A and 70B may be determined based on the following equations:

$$\phi = (X1-(XH/2)) * FOV/XH$$

$$\beta = (X2-(XH/2)) * FOV/XH$$

wherein, FOV is the optical field of view in degrees of the coverage zone 28.

In addition to the distance and angle calculations, it should be appreciated that the object detection system 20 may further determine other parameters of one or more objects detected in the coverage zone 28. For example, the area of a given target object can be computed based on the area of the pixels receiving the image and the determined distance. Further object parameters that may be determined include determining object velocity based on the time derivative of the determined distance, object acceleration based on the second time derivative of distance, and frequency of movement of the object.

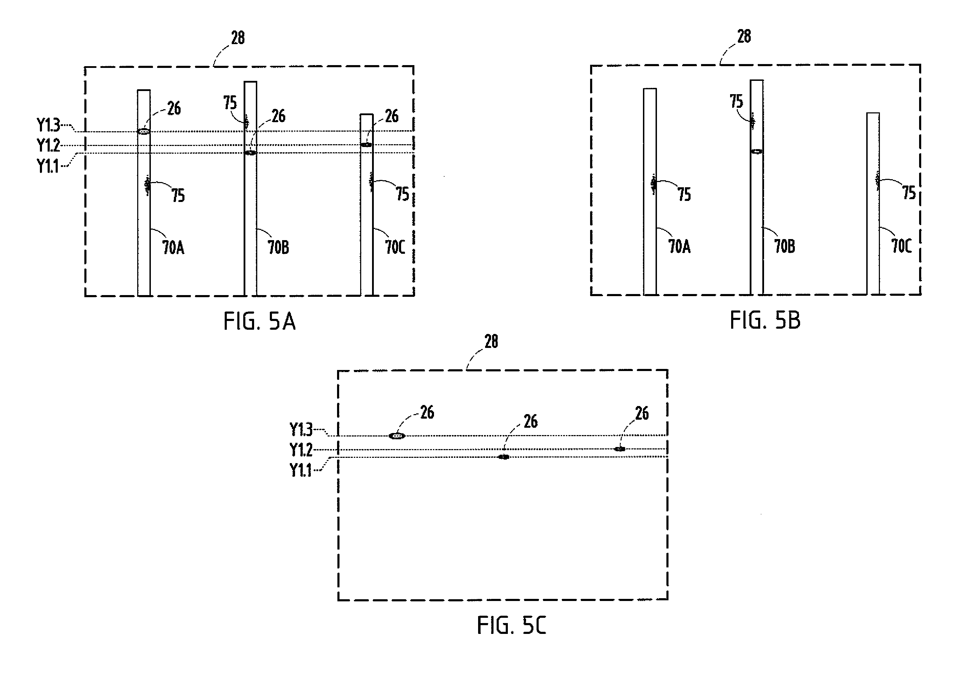

A first example of the detection of objects with the detection system 20 is illustrated in FIGS. 5A-5C. In this example, three objects 70A-70C are shown each in the form of a vertical oriented pole at varying distances relative to each other from the object detection system 20. In FIG. 5A, the field of view is illuminated with a horizontal plane or line of IR illumination which is shown captured in the image by the imager 30 to produce IR illumination 26 lines that are imaged at different vertical elevations on the three objects 70A-70C. The reflected illumination height as captured on the imager 30 for each object is indicative of the distance to the corresponding object. It should be appreciated that the IR illumination is modulated such that it is applied only for a certain time period and is off for a certain time period. FIG. 5B illustrates the image received by imager 30 when the IR illumination is turned off such that ambient light including glare 75 and other interference can be seen. The object detection system 20 advantageously subtracts the image data acquired with the IR illumination turned off as shown in FIG. 5B from the image data acquired with the IR illumination turned on as shown in FIG. 5A to arrive at a processed image shown in FIG. 5C that effectively subtracts out the background image data to reveal only the IR illumination reflections as a function of the target distance. The imaged vertical spaced horizontal lines 26 are then used to calculate the target object distance for each object from the vehicle 10. As can been seen, the leftmost object 70A has the highest vertical position and is indicative of being the closest object, followed by the rightmost object 70C and finally the center object 70B which is the farthest detected object from the sensor system 20.

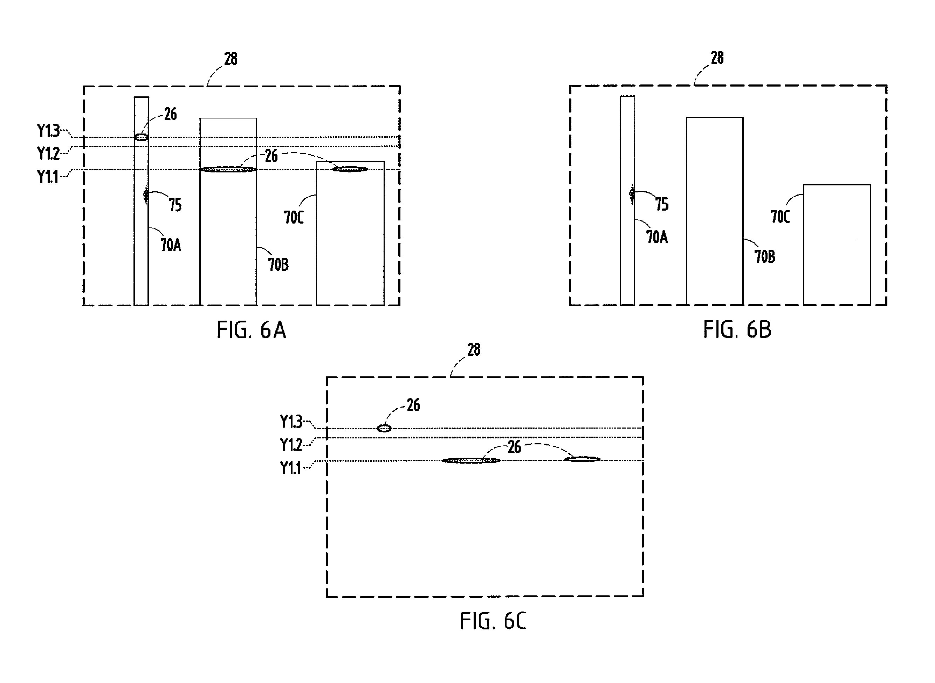

A second example of the object detection is illustrated in FIGS. 6A-6C. As seen in FIG. 6A, three objects 70A-70C of various different shapes are shown illuminated with the IR illumination 26 that generates a horizontal line on detected objects 70A-70C detected at varying vertical levels indicative of the distance to each corresponding object 70A-70C. In FIG. 6B, the image is shown with the IR illumination turned off such that ambient light including glare 75 and other interference is shown with the image absent the IR illumination. FIG. 6C illustrates the processed image after the non-IR illuminated image in FIG. 6B is subtracted from the IR illuminated image of FIG. 6A to subtract out the background data and reveal only the IR illumination reflections as a function of the target distance to each object. The vertical position of each IR illumination line 26 detected for each object is indicative of the distance to each of the corresponding objects 70A-70C.

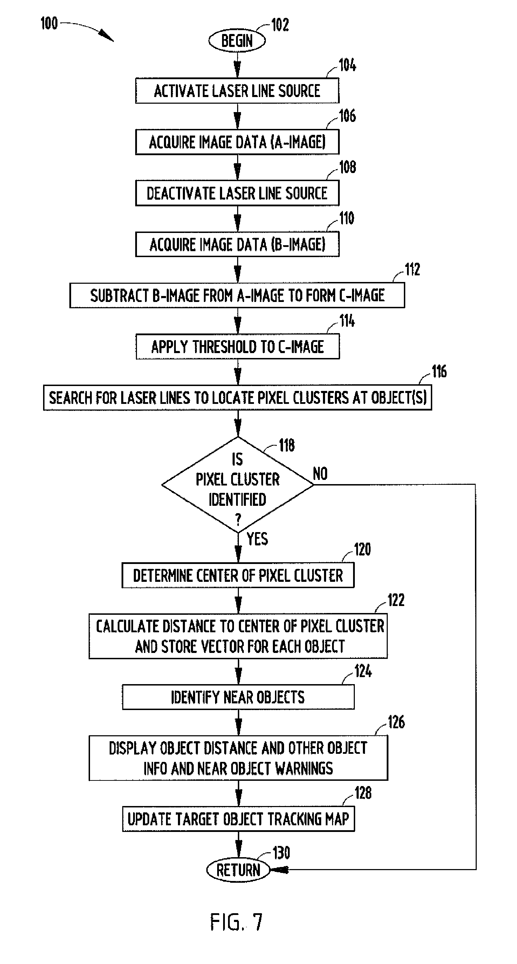

The routine 100 for determining distance to one or more objects, according to one embodiment is illustrated in FIG. 7. Routine 100 begins at step 102 and proceeds to activate the laser line illumination source 104 so as to generate a horizontal plane or line of IR illumination across the coverage zone. Next, imager data is acquired in step 106 to generate a first image A-image with the IR illumination turned on. Next, the laser line source is deactivated in step 108 to turn off the IR illumination and the imager data is acquired in step 110 with the IR illumination turned off to generate a second image B-image. Thus, the illumination source is modulated on and off and images are processed based on the modulation. In step 112, routine 100 subtracts the second B-image from the first A-image to form a third C-image. The C-image removes the background noise including reflections and other ambient light interference so as to reveal only the received IR reflection data as a function of the target distance. Next, in step 116, routine 100 searches for the received reflected laser lines to locate the pixel clusters and then determines if the pixel clusters are identified. If no pixel clusters are identified in step 118, routine 100 returns to step 120. If one or more pixel clusters are identified in step 118, routine 100 proceeds to step 120 to determine the center of the pixel cluster(s) and then calculates a distance from the center of each pixel cluster and stores the vector for each object in step 122. The distance to the center of each pixel cluster is indicative of the distance to the object based on the triangulation equation. Next, at step 124, routine 100 identifies near objects as those objects close to the vehicle which may be of more immediate importance to the driver of the vehicle. Next, in step 126, routine 100 displays the distances and any other object information and any near object warnings indicative of the presence of objects close to the vehicle such that the driver is notified. The object distance, object information, and near object warnings may be presented on a display or other output device. Routine 100 then updates the target object tracking map in step 128 such that objects, particularly objects that are dynamic relative to the vehicle, can be tracked. Finally, step 100 returns at step 130.

Accordingly, the object detection system 20 advantageously determines the distance and other parameters to one or more objects by employing an imager 30 and an IR illumination source 22, according to one embodiment. The system 20 advantageously integrates the use of an imager 30 to acquire distance and other parameter information without requiring additional sensors. Additionally, the distance and other parameters may be overlaid onto a display 50 in combination with the images that are generated by the image to provide for an enhanced output device on board the vehicle 10.

**Claims**

1. An image based vehicle object detection system (20) having a range finder, said system comprising:

    an illuminator (22) adapted to be located on a vehicle (10) for generating a pattern of illumination (26) in an object detection coverage zone (28) relative to the vehicle (10);
    an optics device (32) adapted to be located on the vehicle (10) and spaced from the illuminator (22) for collecting reflected illumination from one or more objects (70A) in the coverage zone (28);
    an imager (30) comprising an array of pixels for receiving images from the coverage zone (28) via the optics device (32), wherein the imager (30) captures images from the coverage zone (28) and the collected reflected illumination from one or more objects (70A) in the coverage zone (28); and
    a processor (42) for processing the received images and reflected illumination signals, wherein the processor (42) determines range to an object (70A) in the coverage zone (28) based on a location of the pixels of the imager (30) detecting the reflected illumination.

2. The system as defined in claim 1, wherein the illuminator (22) generates a substantially planar beam of illumination (26).

3. The system as defined in any of the preceding claim, wherein the illuminator (22) is an infrared illumination source for generating infrared radiation.

4. The system as defined in any of the preceding claim, wherein the illuminator (22) and imager (30) are located on a vehicle (10) so as to detect objects in the vehicle backup zone.

5. The system as defined in any of the preceding claim, wherein the imager (30) comprises a camera for generating video images, wherein the distance is overlaid onto displayed video images.

6. The system as defined in any of the preceding claim, wherein the range is computed as a function of the distance between the illuminator (22) and the imager (30).

7. The system as defined in any of the preceding claim, wherein the processor (42) further detects the angle ($\alpha$) of a detected object relative to a central axis (90) of the coverage zone (28).

8. The system as defined in any of the preceding claim, wherein the detected one or more objects are dynamic object relative to the vehicle (10).

9. A method of detecting range to an object (70A) in a coverage zone (28) with an imager (30) on a vehicle (10), the method comprising the steps of:

generating a pattern of light illumination with an illuminator (22) within a coverage zone (28) relative to the vehicle (10);
receiving reflected illumination from one or more objects (70A) in the coverage zone (28) with an optics device (32);
directing the received reflected illumination via the optics device (32) onto an imager (30) that is spaced from the illuminator (22), wherein the imager (30) comprises an array of pixels for receiving the reflected illumination from the coverage zone (28); and
processing the received reflected illumination with a processor (42) to determine range to an object (70A) based on location of the pixels receiving the reflected illumination.

10. The method as defined in claim 11, wherein the step of generating a pattern of light illumination comprises generating a substantially planar beam of illumination (26).

11. The method as defined in claim 11, wherein a step of generating a pattern of light illumination comprises generating a pattern of infrared illumination (26).

12. The method as defined in claim 11, wherein the method determines range to one or more objects (70A) in the backup zone of a vehicle (10).

13. The method as defined in claim 11 further comprising the step of generating video images of the coverage zone (28) with the imager (30) and displaying the video images on a display with the determined range.

14. The method as defined in claim 11 further comprising the step of detecting an angle ($\alpha$) to an object relative to a central axis (90) of the coverage zone (28).

15. The method as defined in claim 11, wherein the object is dynamic relative to the vehicle (10).

FIG. 1

FIG. 2

FIG. 3

EP 2 341 369 A1

**CONTROL UNIT** 40

μP 42

MEMORY 44

ROUTINE 100

20

LASER IR SOURCE 22

IMAGER 30

**DISPLAY** 50

VIDEO IMAGES 52

OBJECT DISTANCE 54

OBJECT ANGLE 56

AREA 58

OBJECT VELOCITY 60

OBJECT ACCELERATION 62

FREQUENCY OF MOVEMENT 64

FIG. 4

FIG. 5A

FIG. 5B

FIG. 5C

EP 2 341 369 A1

FIG. 6B

FIG. 6A

FIG. 6C

100

102
BEGIN

104
ACTIVATE LASER LINE SOURCE

106
ACQUIRE IMAGE DATA (A-IMAGE)

108
DEACTIVATE LASER LINE SOURCE

110
ACQUIRE IMAGE DATA (B-IMAGE)

112
SUBTRACT B-IMAGE FROM A-IMAGE TO FORM C-IMAGE

114
APPLY THRESHOLD TO C-IMAGE

116
SEARCH FOR LASER LINES TO LOCATE PIXEL CLUSTERS AT OBJECT(S)

118
IS PIXEL CLUSTER IDENTIFIED ?   NO

YES

120
DETERMINE CENTER OF PIXEL CLUSTER

122
CALCULATE DISTANCE TO CENTER OF PIXEL CLUSTER AND STORE VECTOR FOR EACH OBJECT

124
IDENTIFY NEAR OBJECTS

126
DISPLAY OBJECT DISTANCE AND OTHER OBJECT INFO AND NEAR OBJECT WARNINGS

128
UPDATE TARGET OBJECT TRACKING MAP

130
RETURN

FIG. 7

**EUROPEAN SEARCH REPORT**

Application Number

EP 10 19 2071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 102 26 278 A1 (LUX PETER [DE]) 24 December 2003 (2003-12-24) * abstract; figures 1-4,6 * * paragraphs [0007], [0008], [0012], [0014] * * paragraphs [0016], [0021], [0025] * * claims 6,7 * | 1-15 | INV. G01S17/48 G01S17/93 |
| X | EP 1 684 094 A2 (BOSCH GMBH ROBERT [DE]) 26 July 2006 (2006-07-26) * abstract; figures 1,3,4,8 * * paragraph [0012], lines 9 - 11 * * paragraphs [0017], [0025], [0026] * * paragraph [0038] - paragraph [0039] * * paragraph [0043] - paragraph [0044] * * claim 1 * | 1-15 | |
| X | DE 41 07 850 A1 (DAIMLER BENZ AG [DE] DAIMLER CHRYSLER AG [DE]) 17 June 1992 (1992-06-17) * figures 1,4-9 * * column 2, line 40 - line 60 * * column 3, line 19 - line 25 * * column 4, lines 38 - 45 and 64 - 66 * * column 6, line 24 - line 40 * * column 7, line 27 - column 8, line 24 * | 1-15 | TECHNICAL FIELDS SEARCHED (IPC) G01S |
| X | EP 1 628 141 A1 (BOSCH GMBH ROBERT [DE]) 22 February 2006 (2006-02-22) * abstract; figures 1-4 * * paragraph [0022] - paragraph [0027] * * paragraph [0033] - paragraph [0034] * * paragraph [0047] * | 1-15 | |

-/--

The present search report has been drawn up for all claims

| Place of search | Date of completion of the search | Examiner |
|---|---|---|
| Munich | 16 March 2011 | Knoll, Bernhard |

EPO FORM 1503 03.82 (P04C01)

Europäisches
Patentamt

European
Patent Office

Office européen
des brevets

**EUROPEAN SEARCH REPORT**

**Application Number**

EP 10 19 2071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2006 007001 A1 (HELLA KGAA HUECK & CO [DE]) 16 August 2007 (2007-08-16) <br><br> * abstract; figures 1,2 * <br> * paragraph [0006] - paragraph [0007] * <br> * paragraph [0013] - paragraph [0021] * <br> ----- | 1,3-5,8, 9,11-13, 15 | |
| X | EP 1 942 313 A2 (SAMSUNG ELECTRONICS CO LTD [KR]) 9 July 2008 (2008-07-09) <br><br> * figures 1(a),1(b)(a),1(b)(b) * <br> * paragraph [0020] - paragraph [0022] * <br> * paragraph [0026] - paragraph [0027] * <br> ----- | 1-4, 6-12,14, 15 | |

TECHNICAL FIELDS
SEARCHED       (IPC)

The present search report has been drawn up for all claims

| Place of search | Date of completion of the search | Examiner |
|---|---|---|
| Munich | 16 March 2011 | Knoll, Bernhard |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

    ..................................................................

& : member of the same patent family, corresponding
      document

EPO FORM 1503 03.82 (P04C01)

## ANNEX TO THE EUROPEAN SEARCH REPORT
## ON EUROPEAN PATENT APPLICATION NO.

EP 10 19 2071

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2011

| Patent document cited in search report | | Publication date | Patent family member(s) | | Publication date |
|---|---|---|---|---|---|
| DE 10226278 | A1 | 24-12-2003 | NONE | | |
| EP 1684094 | A2 | 26-07-2006 | NONE | | |
| DE 4107850 | A1 | 17-06-1992 | DE 4137550 | A1 | 11-03-1993 |
| EP 1628141 | A1 | 22-02-2006 | DE 102004039740 | A1 | 23-02-2006 |
| DE 102006007001 | A1 | 16-08-2007 | NONE | | |
| EP 1942313 | A2 | 09-07-2008 | CN 101210800 | A | 02-07-2008 |
| | | | KR 100791389 | B1 | 07-01-2008 |
| | | | US 2008159595 | A1 | 03-07-2008 |

EPO FORM P0459

For more details about this annex : see Official Journal of the European Patent Office, No. 12/82